# EUROPEAN PATENT SPECIFICATION

(11) **EP 3 424 818 B1**
(45) Date of publication and mention of the grant of the patent: **30.12.2020**
(21) Application number: 17400042.2
(22) Date of filing: 06.07.2017
(51) Int. Cl.: B64C 27/82, B64C 27/32

(54) **A ROTOR HUB FOR A TAIL ROTOR OF A ROTORCRAFT**
ROTORNABE FÜR EINEN HECKROTOR EINES DREHFLÜGELFLUGZEUGS
MOYEU DE ROTOR POUR UN FENESTRON D'UN GIRAVION

(43) Date of publication of application: 09.01.2019
(73) Proprietor: AIRBUS HELICOPTERS DEUTSCHLAND GmbH, 86609 Donauwörth (DE)
(72) Inventor: Kuntze-Fechner, Gerald, 83703 Gmund am Tegernsee (DE); Mazet, Stéphane, 13340 Rognac (FR); Vogl, Julius, 86368 Gersthofen (DE)
(74) Representative: GPI & Associés

(56) References cited:
- EP-A2- 0 301 995
- US-A- 4 626 172
- US-B1- 8 262 358

## Description

The invention is related to a rotor hub for a tail rotor of a rotorcraft that comprises a plurality of tail rotor blades which are drivable by means of an associated tail rotor drive shaft.

The document EP 0 686 554 A1 describes a rotorcraft with a main rotor and a counter-torque rotor that is positioned at a tail boom of the rotorcraft. The counter-torque rotor is provided for counteracting main rotor torque created by the main rotor on a respective airframe of the rotorcraft. More specifically, the counter-torque rotor is rotatably arranged within a transverse duct located at a duct-type portion of the tail boom and, thus, embodied as a ducted tail rotor in the form of a Fenestron® tail rotor. The duct-type portion is provided with a shroud that defines the transverse duct. However, as such a counter-torque rotor and, more specifically, structure and arrangement of a ducted tail rotor in general, as well as suitable means for rotationally driving it, are well known by the skilled person, a more detailed description thereof is omitted for brevity and conciseness.

Beyond that, the documents US 3,594,097, US 4,626,172, US 4,626,173, US 5,306,119, and US 5,383,767 describe suitable pitch control devices for controlling collective pitch of tail rotor blades of a ducted tail rotor. More specifically, these pitch control devices respectively include a rotor hub that consists of several components including, as main components, a hub-body, a splined flange, and a pitch control member, which is also referred to as "control spider". The hub-body builds the support of the tail rotor blades of the ducted tail rotor, which generate thrust to counteract a respective main rotor torque. The generated thrust is varied by in- or decreasing a predetermined angle of attack of the tail rotor blades by means of pitch angle control using the control spider. In other words, a respectively required counteracting thrust that is generated by the tail rotor blades for counteracting the main rotor torque created by the main rotor is controlled by in- and decreasing the predetermined angle of attack of the tail rotor blades.

More specifically, in order to enable the pitch angle control, the tail rotor blades are supported along their blade axes to enable a rotation thereof around the blade axes. Therefore, the hub-body rotatably supports the tail rotor blades. Furthermore, the hub-body is rigidly mounted to the splined flange for drivingly coupling the tail rotor blades to a tail rotor drive shaft of an associated tail gearbox that drives the ducted tail rotor in operation. Thus, in operation the splined flange transfers a drive torque from the tail rotor drive shaft to the hub-body such that the latter rotates, thereby entraining the tail rotor blades while the collective pitch of the tail rotor blades is controlled using the control spider.

In general, the hub-body is open on one side for ease of access during assembling and maintenance. However, during flight the hub-body must be closed with a cover, in particular with an aerodynamic cover, i. e. a so-called fairing, which protects a respective interior of the hub-body from the environment. Respective fairings are already frequently used for main rotors of rotorcrafts and, e. g., described in the documents EP 2 727 832 A1 and WO 2007/055813 A2.

The fairing is usually made from a thin metal sheet and is only used as an aerodynamic and environmental protection of the interior of the hub-body. The connection of the fairing to the hub-body is generally realized by retainer springs. With these retainer springs, the fairing is clipped into the hub-body.

Such a connection, nevertheless, bears the risk of rotation in operation and may result in a blow off of the fairing, which could damage the ducted tail rotor or the tail boom to a high extend. More specifically, the connection is generally prone to faulty assembly, which may result in insufficient clamping and subsequently lead to rotation of the fairing relative to the hub-body, leading to a comparatively high wear of the hub-body, as well as a complete loss of the fairing, resulting in major damages to the ducted tail rotor or the tail boom. Furthermore, the connection frequently involves an aerodynamic step, which results in a reduction of available power due to increased drag of the rotor hub.

In contrast thereto, the documents US 4,626,172 A and US 4,626,173 A describe a rotor hub, wherein a fairing is mounted to a corresponding hub-body by means of a force-fitted connection. Thus, at least the faulty assembly described above can be avoided.

The hub-body as such must be suitable for support and transfer of the centrifugal force of the tail rotor blades resulting from their rotation. Moreover, as a given ducted tail rotor is usually positioned at an aft position of a respective rotorcraft, its weight has a big impact on an overall center of gravity of the rotorcraft. Furthermore, for enabling introduction of a required rotation and torque into the hub-body such that rotation of the hub-body and the respective tail rotor blades for generation of the respectively required counteracting thrust is enabled, a strong and durable connection of the hub-body to the tail gearbox resp. the tail rotor drive shaft must be provided. Finally, for design purposes as well as initial mounting and maintenance reasons, the given ducted tail rotor should be easy to assemble to the tail gearbox and include as few movable parts as possible for positioning and clamping of the tail rotor blades inside of the hub-body.

Usually, a connection of the hub-body to the tail gearbox resp. its tail rotor drive shaft, as well as support of the tail rotor blades in centrifugal direction is realized with a single component, i. e. the splined flange. This splined flange conventionally consists of a metallic splined sleeve which is mounted to a splined section of the tail rotor drive shaft to transfer rotation and torque from the tail gearbox into the ducted tail rotor. In order to provide for a sufficient strength required for a secure and reliable transfer of rotation and torque, the splined flange is conventionally made of titanium or steel. Furthermore, in order to realize transfer of rotation and torque from the splined flange into the hub-body, both components are usually rigidly attached to each other by means of shear bushings or blade bolts.

More specifically, the splined flange is usually provided with a borehole circle introduced into two horizontal flange plates which are positioned on top and below corresponding tail rotor blade attachments and merged resp. integrally formed in one piece with the metallic splined sleeve. To position the tail rotor blades vertically, there is usually one sliding bushing per tail rotor blade, which clamps the tail rotor blade against a bottom plate of the splined flange with a respective blade bolt.

In order to allow rotation of the tail rotor blades relative to the hub-body and, thus, control generation of the respectively required counteracting thrust by means of the pitch angle control as described above, the hub-body which builds the support of the tail rotor blades is provided with suitable torsion bearings. More specifically, the hub-body usually comprises two coaxial circular walls, which are provided with such torsion bearings for support of the tail rotor blades, which may, thus, be rotated in resp. by means of the torsion bearings relative to the hub-body. By this support, i. e. via the torsion bearings, respectively occurring lead-lag and flapping moments are transmitted from the tail rotor blades into the hub-body. These moments create a comparatively high loading on the hub-body, which results in a comparatively high stress concentration and deformation of the hub-body.

However, one consequence of a comparatively large deformation of the hub-body are large blade tip deflections, which lead to increased gaps between the tail rotor blades and an associated duct of a given ducted tail rotor and, therefore, thrust losses. These thrust losses may at least be decreased by decreasing an existing tolerance of the torsion bearings that are provided for support of the tail rotor blades. In fact, this existing tolerance is depending on the hub-body deformation resulting from the moments and reduction thereof leads to improvement of an underlying thrust capacity of the given ducted tail rotor. The underlying thrust capacity and power of the given ducted tail rotor may further be improved if the support of respective blade attachments of the tail rotor blades is implemented more rigidly such that the blade tip deflections are reduced in operation.

Nevertheless, the hub-body is frequently made from a forged aluminium part that is subsequently machined, so that the hub-body design that is open on one side as described above provides only for a comparatively low bending stiffness due to its geometry. Furthermore, due to the opening on one side of the hub-body, a comparatively high stress concentration may occur, which can lead to local failure and cracks. Therefore, in order to reach an acceptable stiffness of the hub-body that is open on one side, currently two different measures are applied: Application of reinforcement elements such as ribs and stringers, and/or application of reinforcement by increased wall thicknesses.

More specifically, application of reinforcement elements e. g. comprises introduction of a stiffening ring into the hub-body, which runs closely below the top of the hub-body. Thus, the bending stiffness is increased significantly without a remarkable weight impact. Alternatively, application of reinforcement by increased wall thicknesses e. g. comprises reinforcement of the rims and corners/radii in order to increase the components stiffness. Due to the large areas which have to be reinforced, this however results in a heavy weight impact on the hub-body.

The documents US 4,626,172 A and US 4,626,173 A describe a rotor hub with a hub-body that can be formed from an injected and possibly reinforced synthetic material. This would at least already allow a significant weight reduction of the hub-body.

The document US8262358 describes an airplane having an ultra-light weight, self-lubricating propellers hub mounted on fixed wings and housing an engine. The engine rotates a propeller which includes variable pitch propeller blades, connected to a rotational drive interface rotated by the engine. A center hub portion is formed of metal and cast or machined as a single piece. A drum-like composite outer hub portion surrounds and is mounted on an inner hub portion of the hub. The outer hub portion is generally hollow and has fore and aft, spaced apart composite hub plates. The composite hub plates are connected together by a tapered composite structural section of the outer hub portion. The hub plates are also connected to each other by boomerang-shaped composite stiffener ribs which are generally C-shaped. The center hub portion has a central counter bore for receiving a drive shaft adapter for connection to the drive interface.

The document EP0301995 describes a fiber reinforced braided composite main helicopter rotor hub retention plate. The retention plate comprises a fiber reinforced resin braided tubular ring having substantially circumferential fibers interwoven with angled fibers disposed about a central core. Arms extend inward from the braided ring for attachment to a driveshaft.

It is an object of the present invention to provide a new rotor hub for a ducted tail rotor of a rotorcraft that enhances support of respective tail rotor blades in order to improve thrust and control behavior of the ducted tail rotor.

This object is solved by a rotor hub for a tail rotor of a rotorcraft that comprises a plurality of tail rotor blades which are drivable by means of an associated tail rotor drive shaft, the rotor hub comprising the features of claim 1.

More specifically, according to the invention a rotor hub for a tail rotor of a rotorcraft that comprises a plurality of tail rotor blades which are drivable by means of an associated tail rotor drive shaft is provided. The rotor hub comprises a central blade mount and a cup-shaped hub-body. The central blade mount is adapted for being attached to the plurality of tail rotor blades. Furthermore, the central blade mount is provided with a metallic splined sleeve that is adapted for being drivingly coupled to the associated tail rotor drive shaft. The cup-shaped hub-body comprises at least one ring-shaped outer wall and at least one ring-shaped inner wall that are adapted for supporting the plurality of tail rotor blades. Furthermore, the cup-shaped hub-body comprises at least one bottom wall that is provided with a central aperture and that connects the at least one ring-shaped outer wall to the at least one ring-shaped inner wall. The at least one ring-shaped outer wall coaxially encompasses the at least one ring-shaped inner wall. Furthermore, the central blade mount is mounted to the central aperture. Moreover, the at least one ring-shaped inner wall exhibits a polygonal cross-section. The at least one inner wall comprises a predetermined number of flat sections. The predetermined number of flat sections is interconnected for creating the polygonal cross-section of the at least one inner wall. At least a predefined number of the predetermined number of flat sections is provided with round apertures that are adapted for supporting associated ones of the plurality of tail rotor blades. The round apertures exhibit circular cross-sections.

Advantageously, the inventive rotor hub exhibits a decreased overall weight, an increased stiffness and improved reliability, lifetime and safety. According to one aspect, the design of the hub-body is intended to provide cylindrical supports for the tail rotor blades and to provide suitable connection means in centrifugal direction of the tail rotor blades. A cylindrical support can generally either be achieved by machining an aperture into a flat or a spherical surface, while machining an aperture into a cylindrical surface would result in an elliptic aperture. As seen, the ring-shaped inner wall with the polygonal cross-section provides the flat surfaces. Such an implementation is, however, not suitable for the ring-shaped outer wall, as the latter needs to be provided with an aerodynamic outer surface, which is not the case for a polygonal ring. Therefore, the ring-shaped outer wall is preferentially implemented in spherical design.

A respective height of both walls is defined by a predetermined diameter of associated torsion bearings provided for supporting the tail rotor blades in the walls. Furthermore, the ring-shaped outer wall is preferably recessed resp. set back and, consequently, provided with a stepped rim over a predefined length to provide a smooth aerodynamic contour at a predetermined connecting interface between the hub-body and a hub cover without any disruptive step.

Preferably, the hub-body is realized as a composite component by curing composite materials, preferentially carbon fiber reinforced polymers, in a suitable tooling, which simplifies realization of the flat surfaces that compose the ring-shaped inner wall. In this case, the bottom wall of the hub-body is preferably designed to provide an as smooth as possible transition of respective composite fibers from the vertical inner and outer walls to respective horizontal connecting points of blade attachments of the tail rotor blades. If, however, the hub-body is realized using a metal by means of manufacturing with a turning process, the ring-shaped inner wall can be implemented in spherical design, at least with respect to its inner circumference.

According to one aspect, by realizing the hub-body and preferably also an associated hub cover with composite materials, preferentially carbon fiber reinforced polymers, the hub-body and the associated hub cover can be implemented with a comparatively stiff but lightweight design. In particular, improved material allocation to high stress areas can, thus, be performed without weight impact or a requirement of a complex manufacturing process. Advantageously, the improved stiffness results in reduced gaps at associated tail rotor blade supports provided by the hub-body, thus, improving the thrust and control behaviour of the ducted tail rotor. Moreover, a damage tolerant design due to underlying characteristics of the composite materials can be achieved.

According to a further preferred embodiment, the at least one outer wall exhibits a spherical cross-section.

According to a further preferred embodiment, the at least one outer wall is provided with a predefined number of round apertures that are adapted for supporting associated ones of the plurality of tail rotor blades. The round apertures exhibit circular cross-sections.

As seen, the at least one inner wall comprises a predetermined number of flat sections. The predetermined number of flat sections is interconnected for creating the polygonal cross-section of the at least one inner wall. At least a predefined number of the predetermined number of flat sections is provided with round apertures which exhibit circular cross-sections and which are adapted for supporting associated ones of the plurality of tail rotor blades. The round apertures of the predefined number of the predetermined number of flat sections and the round apertures of the at least one outer wall are aligned coaxially.

According to a further preferred embodiment, the cup-shaped hub-body is made of fiber reinforced polymers, the fiber reinforced polymers comprising at least one of carbon fiber reinforced polymers, glass fiber reinforced polymers and aramid fiber reinforced polymers.

According to a further preferred embodiment, the at least one outer wall comprises a stepped rim that is provided at a free end of the at least one upper wall.

According to a further preferred embodiment, a predetermined number of hub cover attachments is mounted to the stepped rim, preferably a predetermined number of riveted nuts.

According to a further preferred embodiment, the rotor hub further comprises a hub cover that comprises an outer circular edge. The outer circular edge is adapted for being rigidly attached to the stepped rim of the cup-shaped hub-body.

According to one aspect, the hub cover is formed with an inner foam core which is covered by several skin layers on the in- and outside of the hub cover in order to achieve a comparatively high stiffness of the hub cover at comparatively low weight. More specifically, by providing the foam core between an inner and an outer skin of the hub cover, a predefined distance between the inner and outer skins can be realized, i. e. a predetermined offset between the inner and outer skins, and therefore an overall stiffness of the hub cover can be increased. Preferably, only three skin layers are arranged on the outside of the hub cover for creating the outer skin, and only two skin layers are arranged on the inside of the hub cover for creating the inner skin. Therefore, according to one aspect reinforcement layers resp. patches are provided at least at respective locations, where the hub cover is to be attached to the hub-body in order to introduce the loads from the hub-body properly.

According to a further preferred embodiment, the hub cover comprises an outer skin and an inner skin that are interconnected at the outer circular edge for creating the outer circular edge.

According to a further preferred embodiment, a foam core is arranged between the outer and inner skins.

According to a further preferred embodiment, a predetermined number of openings is provided at the outer circular edge, the hub cover being adapted for being rigidly attached to the stepped rim of the cup-shaped hub-body at the predetermined number of openings.

According to a further preferred embodiment, the hub cover is provided with a reinforcement patch at each one of the predetermined number of openings.

According to one aspect, the connection between the hub cover and the hub-body is realized as a force-fitted connection by mounting riveted nuts on top of the ring-shaped outer wall of the hub-body and by using bolts to fit the hub cover to the hub-body. The bolts preferably travers the reinforcement patches and are, preferentially, implemented as countersunk bolts for enabling a clean aerodynamic outer contour of the hub cover. In particular, occurring loads can either be transmitted via friction or form-fitted bolts. However, the reinforcement patches are preferably only located at respective connection points, while otherwise a predetermined gap between the hub cover and the hub-body is provided.

Advantageously, the force-fitted connection between the hub cover and the hub-body allows to decrease wear on the hub-body as any rotation of the hub cover relative to the hub-body in operation of the inventive rotor hub is prevented. Furthermore, any risk of a blow off of the hub cover is beneficially eliminated and, therefore, safety of the inventive rotor hub is increased significantly. Moreover, by providing the hub cover as a structural element with the hub-body via the force-fitted connection, a comparatively high stiffness increase without weight increase can be achieved for the inventive rotor hub. Finally, a smooth aerodynamic shape at the force-fitted connection can be provided, thereby reducing drag and improving thrust capability of the inventive rotor hub.

In summary, the inventive rotor hub advantageously enables a secure and reliable fixation of the plurality of tail rotor blades in centrifugal direction as well as a secure connection to an associated tail gearbox and transfer of torque loadings into the hub-body of the rotor hub. Furthermore, the inventive rotor hub is comparatively lightweight, can be manufactured with reduced, comparatively low costs and comprises a reduced number of movable parts, which must be taken into consideration during (dis-) assembling and maintenance.

In particular, by applying a composite design to the hub-body and the hub cover, a comparatively stiff but lightweight support of the tail rotor blades can be achieved. In fact, by using composite materials, respective fiber orientations and sequences within the hub-body and hub cover can be adapted to occurring loadings and stiffness requirements without creating heavy weight or complex to manufacture metallic components. The best ratio of stiffness to weight is reached by using carbon fiber reinforced polymers. In addition, application of the composite design eliminates the risk of crack propagation due to damage tolerant behavior.

Furthermore, the hub cover is advantageously no longer only used as an aerodynamic cover, but moreover also as a structural element that is connected to the hub-body by a force-fitted connection. This significantly increases an overall stiffness of the assembly of hub-body and hub cover without impact on weight or costs. Moreover, the usually occurring aerodynamic step at the connection of conventional hub covers to conventional hub-bodies and the respectively resulting drag are now eliminated and, therefore, an available power is increased.

The present invention is further related to a rotorcraft with a rotor hub as described above.

Preferred embodiments of the invention are outlined by way of example in the following description with reference to the attached drawings. In these attached drawings, identical or identically functioning components and elements are labeled with identical reference numbers and characters and are, consequently, only described once in the following description.
- Figure 1 shows a side view of a rotorcraft with a ducted tail rotor according to the invention, and an enlarged perspective view of the ducted tail rotor,
- Figure 2 shows a partially cut plan view of the ducted tail rotor of Figure 1 with a rotor hub having a hub-body and a hub cover according to the invention,
- Figure 3 shows a perspective view of the rotor hub of Figure 2 with the hub-body according to the invention,
- Figure 4 shows a sectional view of the rotor hub of Figure 3 with a central blade mount according to one aspect,
- Figure 5 shows a perspective view of the hub-body of Figure 3,
- Figure 6 shows a cut view of a section of the hub-body of Figure 3 and Figure 5,
- Figure 7 shows a perspective view of a top side of the hub cover of Figure 2,
- Figure 8 shows a perspective view of a bottom side of the hub cover of Figure 2 and Figure 7,
- Figure 9 shows a cut view of the rotor hub of Figure 2, and
- Figure 10 shows attachment of the hub cover of Figure 7 and Figure 8 to the hub-body of Figure 3 and Figure 5.

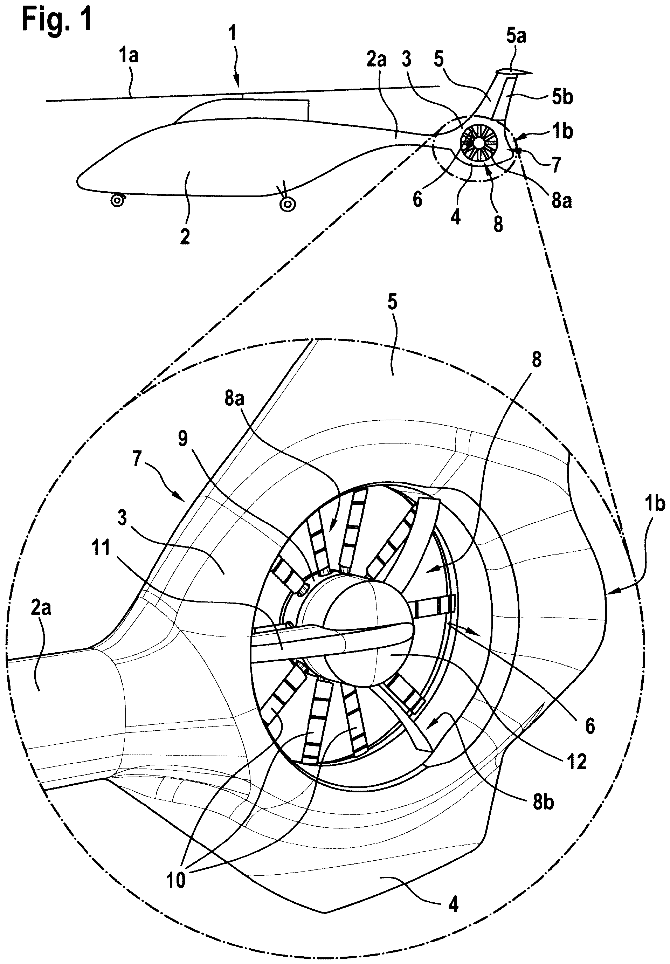

Figure 1 shows a rotorcraft 1 with a fuselage 2 that comprises a tail boom 2a. The rotorcraft 1 is illustratively embodied, and therefore hereinafter for simplicity also referred to, as a helicopter.

The helicopter 1 comprises at least one main rotor 1a configured to provide lift and forward thrust during operation, and at least one counter-torque device 8 configured to provide counter-torque during operation, i. e. to counter the torque created by rotation of the at least one main rotor 1a for purposes of balancing the helicopter 1 in terms of yaw. It should, however, be noted that the present invention is not limited to helicopters and may likewise be applied to other aircrafts that are equipped with rotary wings and at least one counter-torque device according to the present invention.

The at least one counter-torque device 8 is illustratively provided at an aft section 1b of the tail boom 2a, which preferably comprises at least one duct-type portion 7. By way of example, the aft section 1b further comprises a bumper 4 and a fin 5 in the form of a T-tail having a tail wing 5a and a rudder 5b. The tail wing 5a is preferably adjustable in its inclination and can overtake the functioning of a horizontal stabilizer. Alternatively, or in addition, the helicopter 1 is provided with a suitable horizontal stabilizer. The rudder 5b is preferably adapted to provide for enhanced directional control of the helicopter 1 and can be deflected to large angles to reduce a given lateral drag of the fin 5 in sideward flight.

However, it should be noted that the T-tail configuration of the fin 5 and the rudder 5b, as well as the horizontal stabilizer, are merely described for illustrating one exemplary embodiment of the present invention and not for limiting the invention accordingly. Instead, the present invention as described hereinafter can be used with any arbitrary duct-type portion of a rotorcraft, independent on whether this duct-type portion is provided with a T-tail fin or an otherwise configured fin, with or without a rudder and with or without a horizontal stabilizer.

Preferably, the duct-type portion 7 is provided with a shroud 3 that defines at least one transverse duct 6 having preferentially an at least approximately circular or annular cross section, wherein at least one counter-torque rotor 8a is arranged rotatably. The at least one transverse duct 6 illustratively extends through the shroud 3. Furthermore, at least one counter-torque stator 8b is fixedly arranged inside the at least one transverse duct 6 in order to support the at least one counter-torque rotor 8a rotatably.

The counter-torque rotor 8a, the counter-torque stator 8b and the shroud 3, i. e. the transverse duct 6, illustratively define the at least one counter-torque device 8 of the helicopter 1, which is embodied in the form of a ducted tail rotor and, more specifically, in the form of a Fenestron® tail rotor. Accordingly, for simplicity and clarity, the counter-torque device 8 and, in particular, the counter-torque rotor 8a is hereinafter also referered to as the "ducted tail rotor".

The at least one ducted tail rotor 8a illustratively comprises a rotor hub 9 with a rotor axis, and a plurality of tail rotor blades 10 that are attached to the rotor hub 9. The plurality of tail rotor blades 10 is preferably, but not necessarily, distributed in an angularly uneven manner on the rotor hub 9 using phase modulation. More specifically, phase modulation describes the technique of reshaping the noise-frequency spectrum, e. g. such that the geometric angular positions of the plurality of tail rotor blades 10 on the rotor hub 9 are distributed using the sinusoidal modulation law described in the document EP 0 680 871 A1.

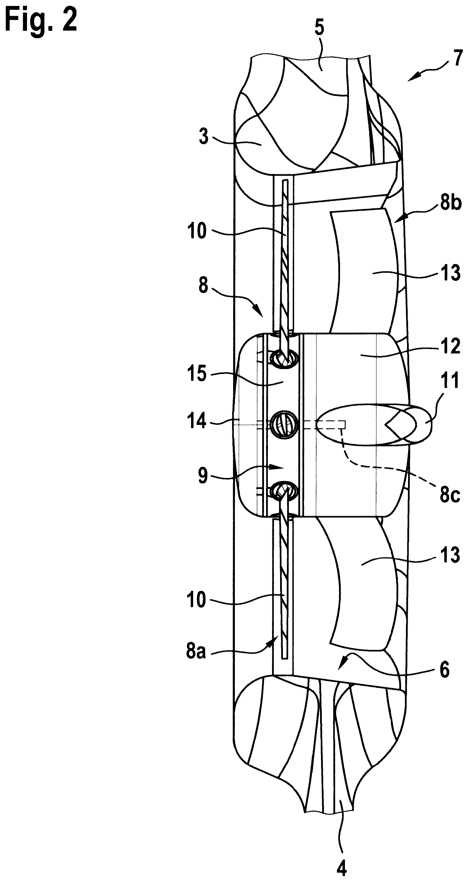

The at least one counter-torque stator 8b illustratively comprises a drive shaft fairing 11 that is fixedly arranged inside the at least one transverse duct 6 and connects a gearbox fairing 12 to the shroud 3. The drive shaft fairing 11 is preferably adapted to receive a power transmission shaft of the at least one ducted tail rotor 8a. The gearbox fairing 12 is further connected to the shroud 3 by means of associated stator vanes (13 in Figure 2). Preferably, the gearbox fairing 12 is adapted to receive a rotor drive transmission of the at least one ducted tail rotor 8a and can further be adapted to receive pitch variation mechanisms for the plurality of tail rotor blades 10.

Figure 2 shows the duct-type portion 7 of Figure 1 with the at least one ducted tail rotor 8a and the at least one counter-torque stator 8b, which are arranged in the at least one transverse duct 6 of the shroud 3. Preferably, the at least one ducted tail rotor 8a is arranged in close proximity to the at least one counter-torque stator 8b and, more specifically, upstream to the at least one counter-torque stator 8b with respect to an air flow generated by the ducted tail rotor 8a in operation.

The at least one ducted tail rotor 8a comprises the plurality of tail rotor blades 10 and the rotor hub 9, which illustratively comprises a hub-body 15 that is covered resp. closed on one side by means of an associated hub cover 14. The at least one counter-torque stator 8b comprises the drive shaft fairing 11 that is fixedly arranged inside the at least one transverse duct 6 and connects the gearbox fairing 12 to the shroud 3. The gearbox fairing 12 is connected to the shroud 3 by means of associated stator vanes 13.

Preferably, the ducted tail rotor 8a is provided with a pitch control device that is at least adapted for controlling collective pitch of the plurality of tail rotor blades 10. The pitch control device is preferably actuatable by means of an associated pitch control shaft which, in turn, is e. g. operated by the pitch variation mechanisms accommodated in the gearbox fairing 12. However, a suitable pitch control device as such as well as suitable pitch variation mechanisms as such are well-known to the person skilled in the art and not part of the present invention. Therefore, they are not described in more detail, for brevity and conciseness.

According to one aspect, the ducted tail rotor 8a is driven in operation by means of an associated tail rotor drive shaft 8c, which preferably drivingly couples the hub-body 15 of the rotor hub 9 of the ducted tail rotor 8a to an associated tail gearbox, e. g. via a rotor drive transmission that is accommodated in the gearbox fairing 12, as described above at Figure 1. Preferably, the hub-body 15 is adapted for supporting the plurality of tail rotor blades 10, which are, thus, drivable by means of the associated tail rotor drive shaft 8c.

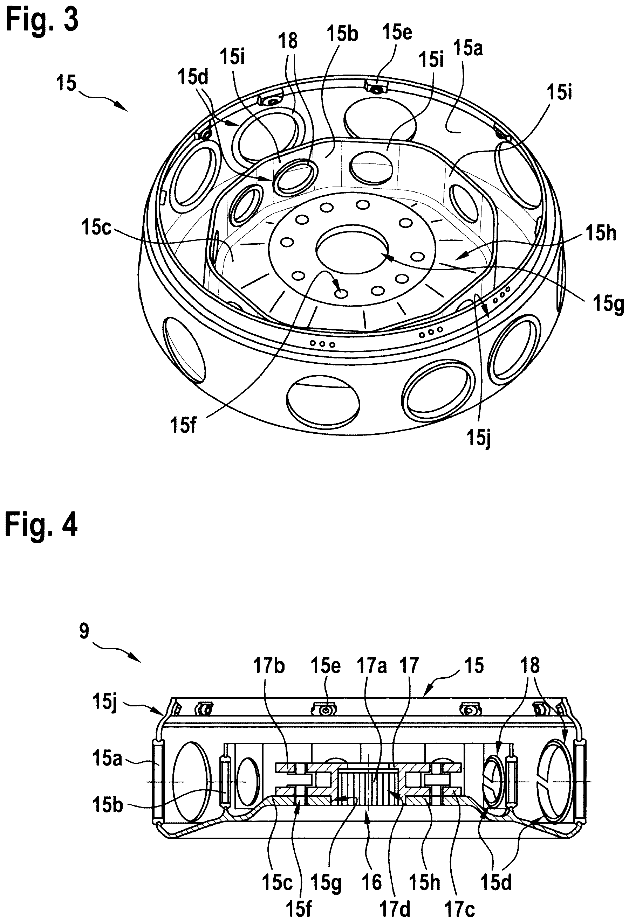

Figure 3 shows the hub-body 15 of the rotor hub 9 of Figure 1 and Figure 2. According to one aspect, the hub-body 15 is bowl- or cup-shaped and comprises an outer wall 15a, an inner wall 15b and a bottom wall 15c. The outer wall 15a and the inner wall 15b are preferably adapted for supporting the plurality of tail rotor blades 10 of the tail rotor 8a of the rotorcraft 1 of Figure 1 and Figure 2.

More specifically, the outer wall 15a and the inner wall 15b are ring-shaped and preferably integrally formed, preferentially in one piece, with the bottom wall 15c, such that the latter connects the outer wall 15a to the inner wall 15b. The outer wall 15a is preferably implemented in spherical design and exhibits a spherical cross-section resp. a circular profile. The inner wall 15b is implemented in polygonal design and exhibits a polygonal cross-section resp. a polygonal profile.

More specifically, the inner wall 15b comprises a predetermined number of flat sections. However, for simplicity and clarity of the drawings, only three flat sections are representatively labelled with the reference number 15i. The flat sections 15i are interconnected for creating the polygonal cross-section of the inner wall 15b.

According to one aspect, at least the bottom wall 15c is made of fiber reinforced polymers and adapted for being attached to the plurality of tail rotor blades 10 of Figure 1 and Figure 2. However, also the outer wall 15a and the inner wall 15b and, thus, the entire hub-body 15 is preferentially made of fiber reinforced polymers.

More specifically, according to one aspect the entire hub-body 15 comprises carbon fiber reinforced polymers. However, other fiber reinforced polymers, such as e. g. glass and/or aramid fiber reinforced polymers, are likewise contemplated.

The outer wall 15a and the inner wall 15b are preferably coaxially arranged such that the outer wall 15a coaxially encompasses the inner wall 15b. Both, the outer and inner wall 15a, 15b are preferably provided with a predetermined number of round apertures that are coaxially aligned. By way of example and for simplicity and clarity of the drawings, only two coaxially aligned, round apertures are labelled with the reference number 15d. Illustratively, these two coaxially aligned, round apertures 15d are equipped with suitable torsion bearings 18 that are adapted for rotatably bearing an associated one of the plurality of tail rotor blades 10 of Figure 1 and Figure 2. Similarly, all other coaxially aligned, round apertures in the outer and inner walls 15a, 15b are likewise equipped with suitable torsion bearings that are adapted for rotatably bearing other ones of the plurality of tail rotor blades 10 of Figure 1 and Figure 2.

More specifically, according to one aspect at least a predefined number of the flat sections 15i, and preferentially each one of the flat sections 15i, is provided with an associated one of the round apertures 15d that preferably exhibits a circular cross-section. Furthermore, according to one aspect the outer wall 15a is provided with a corresponding predefined number of round apertures 15d, which preferentially also exhibit circular cross-sections.

Furthermore, the outer wall 15a is preferably provided with a stepped rim 15j that is arranged at a free end of the at least one upper wall 15a. According to one aspect, a predetermined number of hub cover attachments 15e is mounted to the stepped rim 15j. The plurality of cover attachments 15e is preferentially adapted to allow a secure and reliable attachment of the hub cover 14 of Figure 2 to the hub-body 15. Thus, the plurality of hub cover attachments 15e can be implemented by any means that allow implementation of such a secure and reliable attachment. Preferably, the plurality of hub cover attachments 15e is realized by means of riveted nuts such that the hub cover 14 of Figure 2 may be screwed onto the hub-body 15 using suitable screws or bolts, in particular countersunk screws.

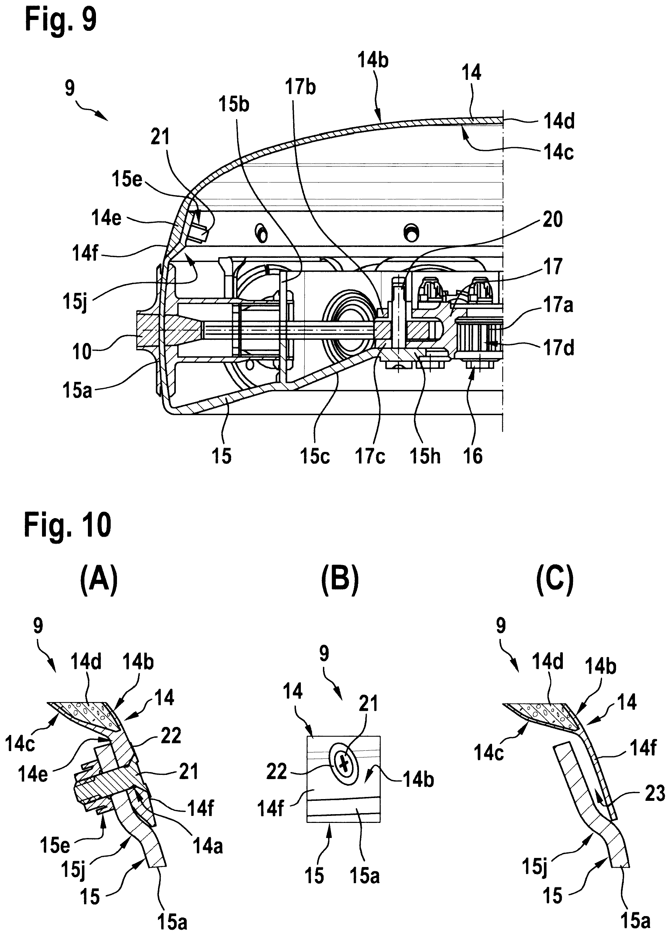

According to one aspect, the hub-body 15 is provided with a central aperture 15g that is adapted for receiving at least partly a central blade mount (16 in Figure 4), as described below with reference to Figure 4. The central aperture 15g is preferably provided in the bottom wall 15c. Furthermore, preferably a plurality of openings is provided in the bottom wall 15c for accommodating blade bolts (20 in Figure 9) which are adapted for attaching the plurality of tail rotor blades 10 of Figure 1 and Figure 2 together with the central blade mount (16 in Figure 4) to the bottom wall 15c. Preferably, for defining the plurality of openings a number of openings is provided that corresponds to a respective number of tail rotor blades that defines the plurality of tail rotor blades 10 of Figure 1 and Figure 2. However, for simplicity and clarity of the drawings only a single opening is labelled with the reference number 15f. According to one aspect, the central aperture 15g and the openings 15f are provided in a reinforced central portion of the bottom wall 15c of the hub-body 15, which is preferentially implemented as a reinforced central baseplate 15h.

Figure 4 shows the rotor hub 9 of Figure 1 and Figure 2 with the hub-body 15 of Figure 2 and Figure 3, and with a central blade mount 16. However, for simplicity and clarity of the drawings, the hub cover 14 of Figure 2 is omitted.

According to one aspect, the central blade mount 16 is adapted for being attached to the plurality of tail rotor blades 10 of Figure 1 and Figure 2. Preferably, the central blade mount 16 is mounted to the reinforced central baseplate 15h and, more specifically, to the central aperture 15g.

The central blade mount 16 is according to one aspect implemented as a splined flange 17 which preferentially comprises at least a metallic splined sleeve 17a that is adapted for being drivingly coupled to the tail rotor drive shaft 8c of Figure 2. The metallic splined sleeve 17a preferably comprises steel and/or titanium.

According to one aspect, the metallic splined sleeve 17a comprises an inner splined circumference 17d. This inner splined circumference 17d is preferably adapted for drivingly engaging a correspondingly splined outer circumference of the tail rotor drive shaft 8c of Figure 2.

Preferably, the central blade mount 16 further comprises an upper flange 17b and a lower flange 17c. The upper and lower flanges 17b, 17c are preferably rigidly attached to or integrally formed with, preferentially in one piece, the metallic splined sleeve 17a. Preferably, the upper and lower flanges 17b, 17c are adapted for being attached to the plurality of tail rotor blades 10 of Figure 1 and Figure 2.

According to one aspect, the central blade mount 16 is glued and/or bonded to the reinforced central baseplate 15h. More specifically, preferably the lower flange 17c is glued and/or bonded to the reinforced central baseplate 15h. However, the central blade mount 16 resp. the lower flange 17c may alternatively only be rigidly attached to the reinforced central baseplate 15h by means of blade bolts (20 in Figure 9) which are adapted for attaching the plurality of tail rotor blades 10 of Figure 1 and Figure 2 together with the central blade mount 16 to the bottom wall 15c.

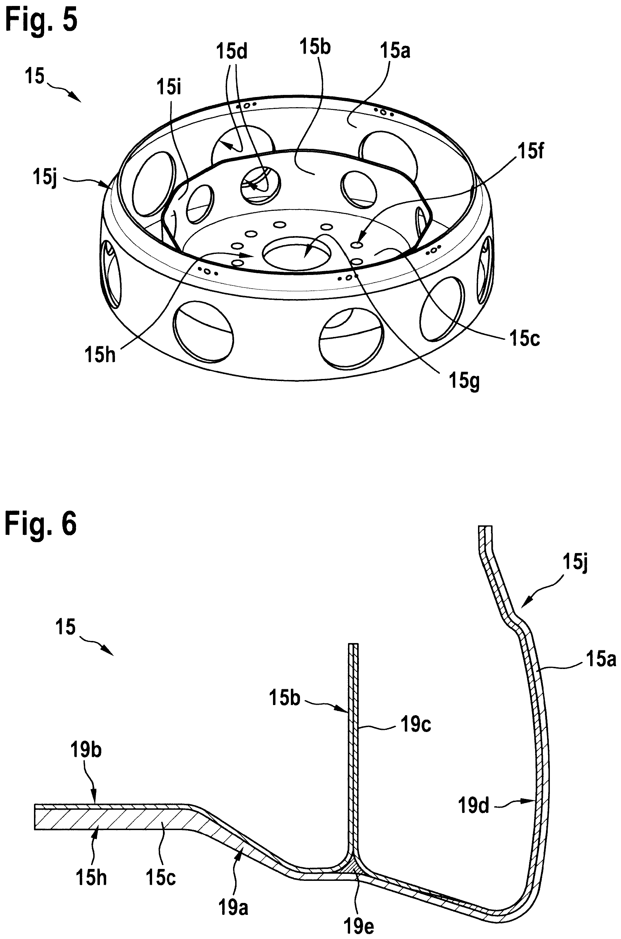

Figure 5 shows the hub-body 15 of Figure 3 and Figure 4 that comprises the outer wall 15a, the inner wall 15b and the bottom wall 15c. Figure 5 further illustrates and clarifies the polygonal design of the inner wall 15b, the spherical design of the outer wall 15a, the stepped rim 15j provided on the outer wall 15a, and the coaxial alignment of the round apertures 15d provided in the inner and outer walls 15b, 15a.

Figure 6 shows a portion of the hub-body 15 of Figure 3 to Figure 5, which is according to one aspect implemented by means of fiber reinforced polymers. More specifically, an exemplary ply layout of the hub-body 15 with the outer wall 15a, the inner wall 15b, and the bottom wall 15c that includes the reinforced central baseplate 15h is illustrated.

According to one aspect, a quasi-isotropic build-up is applied to the hub-body 15 for creating an easy ply layout without any additional patches or stripes. Preferably, the ply layout is separated into four major elements: an outer contour 19a, an inner contour 19b, an inner U-shape 19c, and an outer U-shape 19d.

The outer contour 19a is preferably laminated and represents at least approximately half of the thickness of the outer wall 15a and forms a first, preferentially main portion of the reinforced central baseplate 15h. The inner contour 19b preferably represents at least approximately half of the thickness of the inner wall 15b and forms a second portion of the reinforced central baseplate 15h. The inner U-shape 19c and the outer U-shape 19d preferably connect the inner and outer walls 15b, 15a with each other and, thus, create a stiff combination of the inner and outer walls 15b, 15a.

The inner U-shape 19c and the outer U-shape 19d are illustratively implemented as two separate components in order to ease manufacturing and for improving respective radii. However, the inner U-shape 19c and the outer U-shape 19d may also be implemented as a single component, i. e. as one combined shape.

More specifically, the outer contour 19a preferably consists of two different ply layouts. A first layer is preferably formed using several smaller plies that are split at the radii of the hub-body 15. The first layer is preferentially split at every radius to be able to drape the plies easily into the radii. If the plies are not draped properly into the radii, this may result in resin accumulations that may weaken the hub-body 15. The succeeding layers preferably consist of six ply slices which together create one layer. With this ply layout, it is harder to drape the plies properly into the radii. But, nevertheless, with the inventive configuration a sufficient forming of the radii is possible.

Advantageously, the ply layout of the outer contour 19a is such that every ply section overlaps a previous one just enough to create one continuous layer with all overlaps in combination. Thus, manufacturing effort and costs are reduced by the time that it takes to laminate one layer, and its respective material costs.

The inner contour 19b is preferably basically a reduced copy of the outer wall 15a, but instead of realizing a spherical contour, the vertical polygonal inner wall 15b is formed. More specifically, each layer of the inner contour 19b preferably consists of six identical ply slices. The ply slices overlap similar to those of the outer contour 19a to decrease the layers to be laminated and, therefore, manufacturing time and costs are decreased. This use of the overlap is only possible with a quasi-isotropic ply layout, as the succeeding overlaps differ in orientation.

According to one aspect, a filler 19e is arranged between the outer contour 19a, the inner U-shape 19c and the outer U-shape 19d. The filler 19e is preferably used to close any open space that occurs due to the radii at the bottom wall 15c of the inner wall 15b. Thus, the outer contour 19a, the inner U-shape 19c and the outer U-shape 19d are tightly bonded at their joint defined by the filler 19e. Preferably, the filler 19e is made from composite stacking and cut automatically.

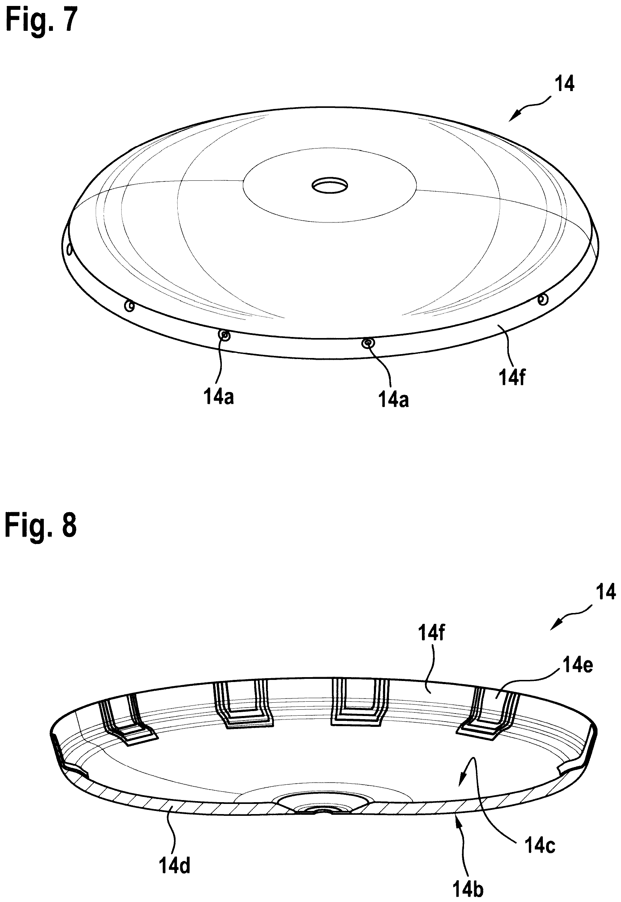

Figure 7 shows the hub cover 14 of the rotor hub 9 of Figure 1 and Figure 2. According to one aspect, the hub cover 14, which is exemplarily embodied in the shape of a frisbee with a central opening, comprises an outer circular edge 14f that is adapted for being rigidly attached to the stepped rim 15j of the cup-shaped hub-body 15 of Figure 3 to Figure 6.

More specifically, the outer circular edge 14f is preferably provided with a predetermined number of openings 14a. According to one aspect, the predetermined number of openings 14a is provided so as to enable a rigid attachment of the hub cover 14 to the stepped rim 15j of the cup-shaped hub-body 15 of Figure 3 to Figure 6.

Figure 8 shows the hub cover 14 with the predetermined number of openings 14a and the outer circular edge 14f of Figure 7. According to one aspect, the hub cover 14 comprises an outer skin 14b and an inner skin 14c that are interconnected at the outer circular edge 14f for creating the outer circular edge 14f. Preferably, a foam core 14d is arranged between the outer and inner skins 14b, 14c.

The outer and inner skins 14b, 14c are preferably embodied using fiber reinforced polymers. Preferentially, the fiber reinforced polymers comprise at least one of carbon fiber reinforced polymers, glass fiber reinforced polymers and aramid fiber reinforced polymers.

According to one aspect, the outer circular edge 14f is provided with a predetermined number of reinforcement patches. However, for simplicity and clarity of the drawings, only a single reinforcement patch is representatively labelled with the reference sign 14e. Preferably, a reinforcement patch 14e is provided at the outer circular edge 14f at each one of the predetermined number of openings 14a. The reinforcement patches 14e are used to strengthen the outer circular edge 14f at respective positions of the predetermined number of openings 14a. At the same time, the outer circular edge 14f is thickened at these respective positions by the reinforcement patches 14e.

Figure 9 shows the rotor hub 9 of Figure 1 and Figure 2 with the hub-body 15 of Figure 2 to Figure 5, with the central blade mount 16 of Figure 4 that is implemented as a splined flange 17, and with the hub cover 14 of Figure 2, Figure 7 and Figure 8. Furthermore, by way of example a single tail rotor blade of the plurality of tail rotor blades 10 of Figure 1 and Figure 2 is shown, which is rotatably accommodated in the outer and inner walls 15a, 15b of the hub-body 15, as described above at Figure 3, and rigidly attached to the central blade mount 16 by means of a suitable blade bolt 20.

According to one aspect, the hub cover 14 and, more specifically, its outer circular edge 14f is rigidly attached to the outer wall 15a of the hub-body 15 in the region of the stepped rim 15j. By way of example, a single attachment by means of a cover bolt 21 is shown, which is preferably screwed into an associated riveted nut that implements one of the hub cover attachments 15e. Thus, the rigid attachment creates a force-fitted connection between the reinforcement patch 14e and the stepped rim 15j using the cover bolt 21 and the riveted nut 15e.

It should be noted that Figure 9 clearly illustrates the aerodynamically shaped contour defined by the connection between the hub cover 14 and the hub-body 15. In particular, this contour is embodied according to one aspect without any exterior, disruptive step or overhang.

Figure 10 shows the rotor hub 9 of Figure 9 with the hub cover 14 and the hub-body 15. More specifically, Figure 10 further illustrates the rigid attachment between the outer circular edge 14f of the hub cover 14 and the outer wall 15a of the hub-body 15 in the region of the stepped rim 15j in greater detail.

In part (A) of Figure 10, the force-fitted connection between one of the reinforcement patches 14e and the stepped rim 15j is exemplified. The reinforcement patch 14e reinforces the outer circular edge 14f at a respective position of one of the predetermined number of openings 14a. The opening 14a is preferably implemented with a countersink and, thus, allows use of a countersunk screw for implementing the cover bolt 21 of Figure 9. The countersunk screw 21 is at least partly arranged in the opening 14a, traverses the stepped rim 15j and is rigidly screwed into the riveted nut 15e.

Preferably, a washer 22 is at least partly arranged between the countersunk screw 21 and the outer circular edge 14f. Thus, the outer circular edge 14f with the reinforcement patch 14e, and the stepped rim 15j are clamped between the washer 22, resp. the countersunk screw 21, and the riveted nut 15e.

In part (B) of Figure 10, the countersunk screw 21 and the washer 22 are shown in greater detail. Part (B) further illustrates the aerodynamically shaped connection between the hub cover 14 and the hub-body 15.

In part (C) of Figure 10, the stepped rim 15j is illustrated relative to the outer circular edge 14f with respect to an exemplary region, where no one of the reinforcement patches 14e is arranged. In this exemplary region, preferably a gap 23 is formed between the outer circular edge 14f and the stepped rim 15j.

It should be noted that the above described, preferred embodiments are merely described to illustrate possible embodiments of the present invention, but not in order to restrict the present invention thereto. Instead, multiple modifications and variations of the invention are possible and should, therefore, also be considered as being part of the invention.

For instance, while according to the illustrated embodiments the hub cover 14 of the rotor hub 9 is only provided with the reinforcement patches 14e at the predetermined number of openings 14a, an annular reinforcement component may likewise be implemented for the entire outer circular edge 14f of the hub cover 14. Furthermore, the outer circular edge 14f of the hub cover 14 may be provided with a stepped rim instead of providing the outer wall 15a of the hub-body 15 with the stepped rim 15j, and so on.

### Reference List

- 1: rotorcraft
- 1a: main rotor
- 1b: fuselage aft section
- 2: fuselage
- 2a: tail boom
- 3: shroud
- 4: bumper
- 5: fin
- 5a: tail wing
- 5b: rudder
- 6: transverse duct
- 7: duct-type tail portion
- 8: counter-torque device
- 8a: counter-torque rotor
- 8b: counter-torque stator
- 8c: counter-torque rotor drive shaft
- 9: counter-torque rotor hub
- 10: counter-torque rotor blades
- 11: drive shaft fairing
- 12: gearbox fairing
- 13: stator vanes
- 14: rotor hub cover
- 14a: hub-body attachment openings
- 14b: hub cover outer skin
- 14c: hub cover inner skin
- 14d: hub cover foam core
- 14e: reinforcement patch
- 14f: outer cover edge
- 15: rotor hub-body
- 15a: outer circular wall
- 15b: inner polygonal wall
- 15c: bottom wall
- 15d: round apertures
- 15e: hub cover attachments
- 15f: blade bolt receiving openings
- 15g: central aperture
- 15h: reinforced central baseplate
- 15i: flat sections
- 15j: stepped rim
- 16: central blade mount
- 17: splined flange
- 17a: splined sleeve
- 17b: upper flange
- 17c: lower flange
- 17d: inner splined circumference
- 18: torsion bearings
- 19a: outer contour
- 19b: inner contour
- 19c: inner U-shape
- 19d: outer U-shape
- 19e: filler
- 20: blade bolt
- 21: cover bolt
- 22: washer
- 23: gap

## Claims

1. A rotor hub (9) for a tail rotor (8a) of a rotorcraft (1) that comprises a plurality of tail rotor blades (10) which are drivable by means of an associated tail rotor drive shaft (14), the rotor hub (9) comprising:
a central blade mount (16) that is adapted for being attached to the plurality of tail rotor blades (10), the central blade mount (16) being provided with a metallic splined sleeve (17a) that is adapted for being drivingly coupled to the associated tail rotor drive shaft (14); and
a cup-shaped hub-body (15) that comprises at least one ring-shaped outer wall (15a) and at least one ring-shaped inner wall (15b) that are adapted for supporting the plurality of tail rotor blades (10), the cup-shaped hub-body (15) comprising at least one bottom wall (15c) that is provided with a central aperture (15g) and that connects the at least one ring-shaped outer wall (15a) to the at least one ring-shaped inner wall (15b), the at least one ring-shaped outer wall (15a) coaxially encompassing the at least one ring-shaped inner wall (15b), wherein the central blade mount (16) is mounted to the central aperture (15g),
**characterized in that** the at least one ring-shaped inner wall (15b) exhibits a polygonal cross-section, wherein the at least one inner wall (15b) comprises a predetermined number of flat sections (15i), the predetermined number of flat sections (15i) being interconnected for creating the polygonal cross-section of the at least one inner wall (15b), wherein at least a predefined number of the predetermined number of flat sections (15i) is provided with round apertures (15d) that are adapted for supporting associated ones of the plurality of tail rotor blades (10), and wherein the round apertures (15d) exhibit circular cross-sections.

2. The rotor hub (9) of claim 1,
wherein the at least one outer wall (15a) exhibits a spherical cross-section.

3. The rotor hub (9) of claim 2,
wherein the at least one outer wall (15a) is provided with a predefined number of round apertures (15d) that are adapted for supporting associated ones of the plurality of tail rotor blades (10), and wherein the round apertures (15d) exhibit circular cross-sections.

4. The rotor hub (9) of claim 3,
wherein the round apertures (15d) of the predefined number of the predetermined number of flat sections (15i) and the round apertures (15d) of the at least one outer wall (15a) are aligned coaxially.

5. The rotor hub (8) of claim 1,
wherein the cup-shaped hub-body (15) is made of fiber reinforced polymers, the fiber reinforced polymers comprising at least one of carbon fiber reinforced polymers, glass fiber reinforced polymers and aramid fiber reinforced polymers.

6. The rotor hub (9) of claim 1,
wherein the at least one outer wall (15a) comprises a stepped rim (15j) that is provided at a free end of the at least one upper wall (15a).

7. The rotor hub (9) of claim 6,
wherein a predetermined number of hub cover attachments (15e) is mounted to the stepped rim (15j), preferably a predetermined number of riveted nuts.

8. The rotor hub (9) of claim 6, further comprising:
a hub cover (14) that comprises an outer circular edge (14f), the outer circular edge (14f) being adapted for being rigidly attached to the stepped rim (15j) of the cup-shaped hub-body (15).

9. The rotor hub (9) of claim 8,
wherein the hub cover (14) comprises an outer skin (14b) and an inner skin (14c) that are interconnected at the outer circular edge (14f) for creating the outer circular edge (14f).

10. The rotor hub (9) of claim 9,
wherein a foam core (14d) is arranged between the outer and inner skins (14b, 14c).

11. The rotor hub (9) of claim 9,
wherein a predetermined number of openings (14a) is provided at the outer circular edge (14f), the hub cover (14) being adapted for being rigidly attached to the stepped rim (15j) of the cup-shaped hub-body (15) at the predetermined number of openings (14a).

12. The rotor hub (9) of claim 11,
wherein the hub cover (14) is provided with a reinforcement patch (14e) at each one of the predetermined number of openings (14a).

13. A rotorcraft (1) with a rotor hub (9) according to one of the preceding claims.

## Patentansprüche

1. Rotornabe (9) für einen Heckrotor (8a) eines Drehflügelflugzeugs (1), der eine Mehrzahl von Heckrotorblättern (10) umfasst, die mittels einer zugehörigen Heckrotor-Antriebswelle (14) antreibbar sind, wobei die Rotornabe (9) umfasst:
eine zentrale Blatthalterung (16), die eingerichtet ist, um an der Mehrzahl von Heckrotorblättern (10) befestigt zu werden, wobei die zentrale Blatthalterung (16) mit einer metallischen Keilnutbuchse (17a) versehen ist, die eingerichtet ist, um antriebsmäßig mit der zugehörigen Heckrotor-Antriebswelle (14) verbunden zu werden; und
einen becherförmigen Nabenkörper (15), der mindestens eine ringförmige Außenwand (15a) und mindestens eine ringförmige Innenwand (15b) umfasst, die zum Tragen der Mehrzahl von Heckrotorblättern (10) eingerichtet sind, wobei der becherförmige Nabenkörper (15) mindestens eine Bodenwand (15c) umfasst, die mit einer zentralen Öffnung (15g) versehen ist und die die mindestens eine ringförmige Außenwand (15a) mit der mindestens einen ringförmigen Innenwand (15b) verbindet, wobei die mindestens eine ringförmige Außenwand (15a) die mindestens eine ringförmige Innenwand (15b) koaxial umschließt, wobei die zentrale Blatthalterung (16) an der zentralen Öffnung (15g) angebracht ist,
**dadurch gekennzeichnet, dass** die mindestens eine ringförmige Innenwand (15b) einen polygonalen Querschnitt aufweist, wobei die mindestens eine Innenwand (15b) eine vorgegebene Anzahl von flachen Abschnitten (15i) umfasst, dass die vorgegebene Anzahl von flachen Abschnitten (15i) miteinander verbunden sind, um den polygonalen Querschnitt der mindestens einen Innenwand (15b) zu erzeugen, dass mindestens eine vordefinierte Anzahl der vorgegebenen Anzahl von flachen Abschnitten (15i) mit runden Öffnungen (15d) versehen ist, die eingerichtet sind, um zugeordnete Blätter aus der Mehrzahl von Heckrotorblättern (10) zu tragen, und wobei die runden Öffnungen (15d) kreisförmige Querschnitte aufweisen.

2. Rotornabe (9) nach Anspruch 1,
bei der die mindestens eine Außenwand (15a) einen kugelförmigen Querschnitt aufweist.

3. Rotornabe (9) nach Anspruch 2,
bei der die mindestens eine Außenwand (15a) mit einer vordefinierten Anzahl von runden Öffnungen (15d) versehen ist, die eingerichtet sind, um zugeordnete Blätter aus der Mehrzahl von Heckrotorblättern (10) zu tragen, und bei der die runden Öffnungen (15d) kreisförmige Querschnitte aufweisen.

4. Rotornabe (9) nach Anspruch 3,
bei der die runden Öffnungen (15d) der vordefinierten Anzahl aus der vorgegebenen Anzahl von flachen Abschnitten (15i) und die runden Öffnungen (15d) der mindestens einen Außenwand (15a) koaxial ausgerichtet sind.

5. Rotornabe (9) nach Anspruch 1,
bei der der becherförmige Nabenkörper (15) aus faserverstärkten Polymeren hergestellt ist, wobei die faserverstärkten Polymere mindestens eines von kohlenstofffaserverstärkten Polymeren, glasfaserverstärkten Polymeren und aramidfaserverstärkten Polymeren umfassen.

6. Rotornabe (9) nach Anspruch 1,
bei der die mindestens eine Außenwand (15a) einen abgestuften Rand (15j) umfasst, der an einem freien Ende der mindestens einen oberen Wand (15a) vorgesehen ist.

7. Rotornabe (9) nach Anspruch 6,
bei der eine vorgegebene Anzahl von Nabenabdeckungsbefestigungen (15e), vorzugsweise eine vorgegebene Anzahl von Nietmuttern, an dem abgestuften Rand (15j) angebracht ist.

8. Rotornabe (9) nach Anspruch 6, ferner umfassend:
eine Nabenabdeckung (14), die eine äußere kreisförmige Kante (14f) umfasst, wobei die äußere kreisförmige Kante (14f) eingerichtet ist, starr an dem abgestuften Rand (15j) des becherförmigen Nabenkörpers (15) befestigt zu werden.

9. Rotornabe (9) nach Anspruch 8,
bei der die Nabenabdeckung (14) eine Außenhaut (14b) und eine Innenhaut (14c) umfasst, die an der äußeren kreisförmigen Kante (14f) miteinander verbunden sind, um die äußere kreisförmige Kante (14f) zu bilden.

10. Rotornabe (9) nach Anspruch 9,
bei der ein Schaumstoffkern (14d) zwischen der Außenhaut und der Innenhaut (14b, 14c) angeordnet ist.

11. Rotornabe (9) nach Anspruch 9,
bei der eine vorgegebene Anzahl von Öffnungen (14a) an der äußeren kreisförmigen Kante (14f) vorgesehen ist, wobei die Nabenabdeckung (14) eingerichtet ist, starr an dem abgestuften Rand (15j) des becherförmigen Nabenkörpers (15) an der vorgegebenen Anzahl von Öffnungen (14a) befestigt zu werden.

12. Rotornabe (9) nach Anspruch 11,
bei der die Nabenabdeckung (14) mit einem Verstärkungsflicken (14e) an jeder der vorgegebenen Anzahl von Öffnungen (14a) versehen ist.

13. Drehflügelflugzeug (1) mit einer Rotornabe (9) nach einem der vorhergehenden Ansprüche..

## Revendications

1. Moyeu de rotor (9) pour un rotor de queue (8a) de giravion (1) qui comprend une pluralité de pales de rotor de queue (10) qui peuvent être entrainées au moyen d'un arbre de transmission de rotor de queue associé (14), le moyeu de rotor (9) comprenant :
un support central de pales (16) qui est apte à être fixé à la pluralité de pales de rotor de queue (10), le support central de pales (16) étant pourvu d'un manchon métallique cannelé (17a) qui est adapté pour être couplé en entraînement à l'arbre de transmission de rotor de queue associé (14) ; et
un corps de moyeu en forme de coupelle (15) qui comprend au moins une paroi externe en forme d'anneau (15a) et au moins une paroi interne en forme d'anneau (15b) qui sont aptes à soutenir la pluralité de pales de rotor de queue (10), le corps de moyeu en forme de coupelle (15) comprenant au moins une paroi de fond (15c) qui est pourvu d'une ouverture centrale (15g) et qui raccorde ladite au moins une paroi externe en forme d'anneau (15a) à ladite au moins une paroi interne en forme d'anneau (15b), ladite au moins une paroi externe en forme d'anneau (15a) enveloppant de façon coaxiale ladite au moins une paroi interne en forme d'anneau (15b), dans lequel le support central de pales (16) est monté sur l'ouverture centrale (15g),
**caractérisé en ce que** ladite au moins une paroi interne en forme d'anneau (15b) présente une section transversale polygonale, dans lequel ladite au moins une paroi interne (15b) comprend un nombre prédéterminé de parties planes (15i), le nombre prédéterminé de parties planes (15i) étant interconnecté de façon à former la section transversale polygonale de ladite au moins une paroi interne (15b), dans lequel au moins un nombre prédéfini du nombre prédéterminé de parties planes (15i) est pourvu d'ouvertures circulaires (15d) qui sont aptes à soutenir les pales associées de la pluralité de pales de rotor de queue (10), et dans lequel les ouvertures circulaires (15d) présentent des sections transversales circulaires.

2. Moyeu de rotor (9) selon la revendication 1,
dans lequel ladite au moins une paroi externe (15a) présente une section transversale sphérique.

3. Moyeu de rotor (9) selon la revendication 2,
dans lequel ladite au moins une paroi externe (15a) est prévue avec un nombre prédéfini d'ouvertures circulaires (15d) qui sont aptes à soutenir les pales associées de la pluralité de pales de rotor de queue (10), et dans lequel les ouvertures circulaires (15d) présentent des sections transversales circulaires.

4. Moyeu de rotor (9) selon la revendication 3,
dans lequel les ouvertures circulaires (15d) du nombre prédéfini dudit nombre prédéterminé de parties planes (15i) et les ouvertures circulaires (15d) de ladite au moins une paroi externe (15a) sont alignées de façon coaxiale.

5. Moyeu de rotor (9) selon la revendication 1,
dans lequel le corps de moyeu en forme de coupelle (15) est composé de polymères renforcés de fibres comprenant au moins l'un parmi des polymères renforcés de fibres de carbone, des polymères renforcés de fibres de verre et des polymères renforcés de fibres d'aramide.

6. Moyeu de rotor (9) selon la revendication 1,
dans lequel ladite au moins une paroi externe (15a) comprend un pourtour étagé (15j) qui est prévu à une extrémité libre de ladite au moins une paroi supérieure (15a).

7. Moyeu de rotor (9) selon la revendication 6,
dans lequel un nombre prédéterminé de fixations de couvercle de moyeu (15e) est monté sur le pourtour étagé (15j), de préférence un nombre prédéterminé d'écrous à river.

8. Moyeu de rotor (9) selon la revendication 6, comprenant en outre :
un couvercle de moyeu (14) qui comprend un bord circulaire externe (14f), le bord circulaire externe (14f) étant apte à être fixé de façon rigide au pourtour étagé (15j) du corps de moyeu en forme de coupelle (15).

9. Moyeu de rotor (9) selon la revendication,
dans lequel le couvercle de moyeu (14) comprend une peau externe (14b) et une peau interne (14c) qui sont interconnectées à l'emplacement du bord circulaire externe (14f) pour créer le bord circulaire externe (14f).

10. Moyeu de rotor (9) selon la revendication 9,
dans lequel un noyau de mousse (14d) est disposé entre les peaux intérieure et extérieure (14b, 14c).

11. Moyeu de rotor (9) selon la revendication 9,
dans lequel un nombre prédéterminé d'ouvertures (14a) est prévu sur le bord circulaire externe (14f), le couvercle de moyeu (14) étant apte à être fixé de façon rigide sur le pourtour étagé (15j) du corps de moyeu en forme de coupelle (15) à l'emplacement du nombre prédéterminé d'ouvertures (14a).

12. Moyeu de rotor (9) selon la revendication 11,
dans lequel le couvercle de moyeu (14) est prévu avec une pièce de renfort (14e) à l'emplacement de chaque ouverture du nombre prédéterminé d'ouvertures (14a).

13. Giravion (1) équipé d'un moyeu de rotor (9) selon l'une quelconque des revendications précédentes.
